Europäisches Patentamt

(19) European Patent Office

Office européen des brevets

(11) Publication number: **0 269 367**
**A2**

## (12) EUROPEAN PATENT APPLICATION

(21) Application number: 87310211.5

(22) Date of filing: 19.11.87

(51) Int. Cl.⁴: **A45C 11/04**

(30) Priority: 25.11.86 AU 65647/86

(43) Date of publication of application:
**01.06.88 Bulletin 88/22**

(84) Designated Contracting States:
**DE ES FR GB IT NL SE**

(71) Applicant: **SOLA INTERNATIONAL HOLDINGS, LTD.**
**P.O. Box 244**
**Lonsdale Morphett Vale South Australia 5162(AU)**

(72) Inventor: **Rich, Gregory John**
**32 Willow Wood Drive**
**Urrbrae South Australia(AU)**
Inventor: **Loots, Gerritt**
**95 Melsetter Road**
**Hackham West South Australia(AU)**

(74) Representative: **Pendlebury, Anthony et al**
**Page, White & Farrer 5 Plough Place New Fetter Lane**
**London EC4A 1HY(GB)**

(54) Contact lens package.

(57) A contact lens package including a container (1) suitable for containment of sterile fluid, a non-reusable sealing means (5,16,18) which, in use, co-operates with the container (1) to seal its interior from contaminants and a lens holder (6,11) capable of holding a contact lens (9) in a fixed position within the container (1).

FIG 1

## CONTACT LENS PACKAGE

This invention relates to a contact lens package, more particularly to a non-reusable contact lens package which maintains a contact lens in a sterile condition until the package is opened. Such packages are suitable for transmitting a lens from the manufacturer to its destination, or for allowing a lens wearer to store new lenses for future use.

It is the current practice for contact lens manufacturers to transmit the lenses to the receipient optometrist, opthalmologist, optical dispenser or other contact lens handler in a sealed glass vial containing a sterile fluid. To give the recipient the necessary assurance that the vial has not been tampered with before he receives it, the seal is normally arranged to be of a configuration such as a crimped cap. The contact lens is loosely contained within the sterile fluid in the vial. This has the disadvantage that the recipient has to remove the lens by means of tweesers or other instrument, which may damage the lens and is inconvenient. Furthermore, insertion of the lens into the eye requires manipulation with fingers and this gives rise to a risk of lens contamination, especially on the surface of the lens which subsequently comes into contact with the eye.

Users of contact lenses have for some time been provided with a variety of storage containers into which the lenses can be placed when not in the eye, for example at night in the case of day wear lenses. These storage containers need to be sealed to contain the fluid necessary to maintain hydration of the lens and it is conventional to provide some form of lens holder within the container. The container must necessarily be reusable and it has not therefore been the practice to provide a seal which assures that the container has not been opened. Various configurations of lens holder have been proposed. Many include a domed structure which is integral with a screw-on or push-fit cap of a cylindrical container. Often the surface tension of the fluid is used to adhere the contact lens to this dome for removal. However, this technique requires that the fluid is drained before the cap can be removed successfully. Other configurations have used some form of clip or strap which extends from one side of the dome over the convex surface of a pre-positioned contact lens and clips onto an opposing side of the dome. It is common practice with screw-fit caps to utilise some form of O ring to promote good fluid-tightness of the seal between the cap and the container. It is a common requirement of temporary storage containers that they are easy to use because they will be used by people with uncorrected defective vision.

Extended, or continuous, wear contact lenses pose special packaging problems. One such extended wear lens is intended to be issued directly to the wearer, worn for up to 30 days and then discarded. It is desirable that several months' supply of disposable lenses are issued to the wearer simultaneously For several reasons traditional glass vials are unsuitable for packaging lenses supplied by this method. First, removal of a lens from the glass vial with tweesers requires goods eyesight and cannot easily be accomplished by some people with uncorrected defective vision. Second, some lenses are very fragile and are susceptible to damage when being removed from a vial with tweesers. If damage occurs and is undetected by the wearer, it may be detrimental to the health of the eye, or the wearer's comfort. If it is detected it probably means that the lens has to be discarded unworn. Third, because the lens is freely suspended in the sterile fluid within the vial, it is able to be turned inside out: this problem is not easily detected by a person with uncorrected defective vision. Fourth, the vial is fragile, and finally the large amount of handling required to remove a lens from the vial and orient it correctly for placement into the wearer's eye increases the risk of contamination: this is undesirable for any lens, but is particularly undesirable for extended wear lenses because any contaminant will be in contact with the eye for so much longer.

Extended wear lenses have been supplied in a bubble pack in which each "bubble" contains a lens together with the necessary sterile fluid. However, this system has been shown to have the disadvantage that at least some of the lenses dry out before the package is opened by the wearer and are therefore unusable.

It is proposed that disposable contact lenses of the type used for extended wear will also be issued for occasional short-term use: for example sporting activity. The packaging for such lenses needs to be robust enough to survive intact until the wearer needs to use the lens. Glass vials would be unsuitable for the harsh treatment to which such lens packages are likely to be subjected.

It is an object of the present invention to provide a robust non-reusable contact lens package which combines the assurance of sterility inherent in the use of a sealed cap assembly with the ease of use of a lens holder such as provided for use in temporary lens storage containers.

According to the present invention a contact lens package includes a container suitable for containment of sterile fluid, a non-reusable sealing means which, in use, cooperates with the container to seal its interior from contaminants and a lens holder capable of holding a contact lens in a fixed position within the container. Preferably the lens holder is mounted on the sealing means. Most preferably the sealing means include a cap which, in use, is crimped onto the container. Desirably the container is provided with an inclined surface so that the cap is bent through an angle of less than 90° when crimped. Advantageously the lens holder has a convex portion which substantially corresponds to the concave surface of a contact lens. Desirably the convex portion has at least one transverse radial groove formed therein so that sterile fluid can flow around the contact lens to reduce the suction that has to be overcome when removing the lens from the convex portion. Most desirably the lens can be held in position by means of a concave cover which has means to provide a snap fit onto the convex portion after a lens has been positioned thereon.

The invention also relates to a non-reusable seal contact lens package containing a contact lens and a sterile liquid in which the contact lens is held in position on a convex domed portion which can only be removed from the container after breaking the seal. Advantageously, the seal includes a cap crimped onto the container after the lens and liquid have been introduced.

The invention further relates to a kit of parts for constructing a non-reusable contact lens package including a container, a non-reusable seal, and a lens holder. Desirably the seal includes a cap for crimping onto the container and a lens holder is joined onto the seal.

The invention will now be described, by way of example only, and with reference to the accompanying drawings of which:-

Figure 1 is an exploded pictorial representation of a lens package containing a lens; and

Figure 2 is a cross-sectional representation of an assembled lens package.

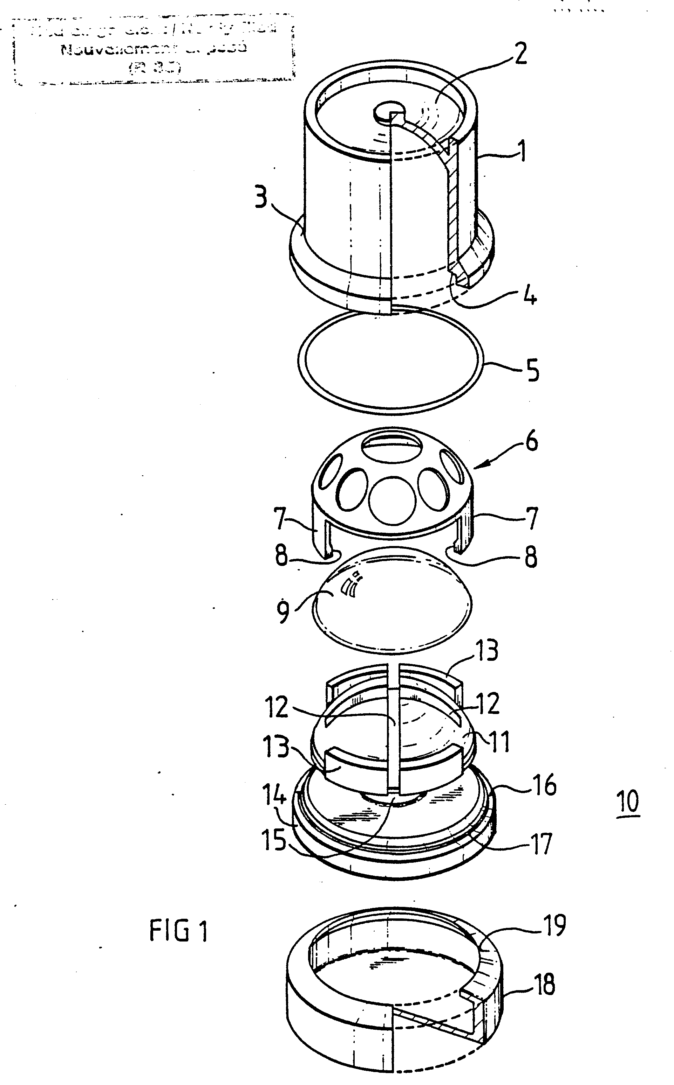

Figure 1 shows a cylindrical container 1 having one of its ends 2 closed off and an annular inclined rim 3 formed at the other end. A circumferential shoulder 4 is situated between the annular rim 3 and the inner surface of the cylindrical container 1. The shoulder 4 is adapted to receive an O ring 5. A domed lens holder cover 6 having clamping legs 7 with feet 8 is able to be placed over a soft contact lens 9 which can rest on lens holder assembly 10. Cylindrical container 1, lens holder cover 6 and lens holder assembly 10 are all made out of polycarbonate material.

The lens holder 10 has a convex domed portion 11, the surface of which is intersected by two mutually perpendicular radial grooves 12. The lens 9 is maintained in position on the convex dome 11 by means of circumferential rim wall members 13.

The legs 7 of the lens holder cover 6 cooperate with these rim wall members 13 and the feet 8 of the legs 7 locate beneath the edge of the convex dome 11 to snap fit the lens holder 6 into position.

The convex dome 11 is elevated from a substantially disc shaped portion 14 by means of a substantially cylindrical stalk 15. The disc portion 14 has a circumferential flat portion 16 and shoulder 17 which can cooperate with O ring 5 to form a fluid tight seal. The O ring 5 is made of a silicone material. An aluminium cap 18 has an inclined crimpable edge 19, which can be crimped onto the annular inclined rim 3 of the cylindrical container 1.

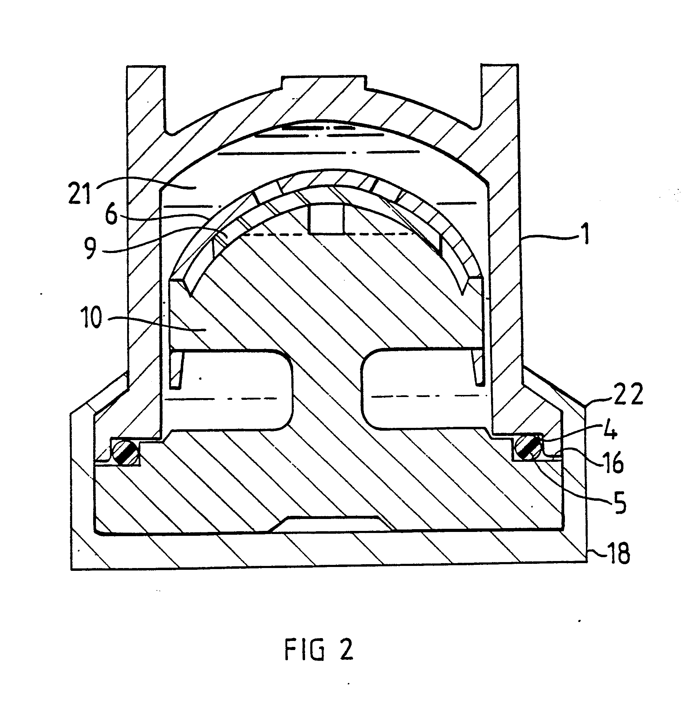

Figure 2 shows the various parts in their assembled relationships. In use a lens 9 is placed onto the lens holder assembly 10 and secured by means of lens holder 6. The assembly, lens and holder is then placed into the cylindrical container 1 which is filled with a sterile liquid 21, one such liquid is saline solution. The O ring 5 is squeezed between the circumferential flat portion 16, shoulder 17 and the shoulder 4 on flange 3.

The lens package is used in the following manner. The lens manufacture packages lenses into the non-reusable package according to the invention in a sterile environment and seals the container by means of the crimped cap 18 after having filled the container 1 with sterile liquid 21. Application of the crimped cap 18 slightly compresses O ring 5. The entire assembly is hen autoclaved before being dispatched to an optometrist or any other desired destination such as the wearer. Besides being designed to be autoclaveable the package materials are chosen so that those parts of the package that can come into contact with the sterile liquid 21 are made from non-toxic materials.

The advantage of using an inclined crimpable edge 19, together with an inclined rim 3 is that the integrity of the seal is more likely to be maintained during autoclaving. This is because the aluminium cap 18 is thought to be able to hinge about the corner 22 when the various parts expand due to the temperature increase during autoclaving. It has been found that the inclined configuration maintains the integrity of the seal after autoclaving to a greater extent than other possible configurations, for example a configuration with a right angle bend at corner 22. The recipient can be sure that provided the crimped cap 18 is still firmly in place, the lends contained within the package will be in a sterile state. It is desirable that the recipient is assured of this fact because it is time consuming and potentially damaging to the lens if it is necessary to sterilize it upon receipt. It is also unlikely that the recipient will have suitable sterilising equipment in cases when the lens has been sent direct to the wearer.

The use of lens holder 10 with lens holder cover 6 enables the lens to be removed from the package by someone with uncorrected defective vision and prevents the lens being presented in an "inside out" configuration. It also reduces the amount of handling to which the lens is subjected and can completely eliminate finger contact with the surface of the lens that is to be in contact with the wearer's eye. The use of a polycarbonate material provides a robust package which can be safely carried about by the wearer and is autoclaveable.

Although in this particular embodiment of the invention the use of a crimped cap has been described, it will be obvious to those skilled in the art that alternative closure seals could be used. For example, a heat shrink wrap could be used either with the lens holder described herein, or in conjunction with a screw fitting cap or a lens holder which threads onto the container.

## Claims

1. A contact lens package including a container (1) suitable for containment of sterile fluid, a non-reusable sealing means (5,16,18) which, in use, co-operates with the container (1) to seal its interior from contaminants and a lens holder (6,11) capable of holding a contact lens (9) in a fixed position within the container (1).

2. A contact lens package as claimed in Claim 1, in which the lens holder (6,11) is mounted on the sealing means (14,16,17).

3. A contact lens package as claimed in any preceding claim in which the sealing means includes a cap (18) which, in use, is crimped onto the container (1).

4. A contact lens package as claimed in Claim 3, in which the container (1) is provided with an inclined surface (3) so that the cap (18) is bent through an angle of less than 90° when crimped.

5. A contact lens package as claimed in any one of the preceding claims, in which the lens holder (10) has a convex portion (11) which substantially corresponds to the concave surface of the contact lens (9).

6. A contact lens package as claimed in Claim 5, in which the convex portion (11) has at least one transverse radial groove (12) formed therein so that sterile fluid can flow around the contact lens (9) to reduce the suction that has to be overcome when removing the lens from the convex portion (11).

7. A contact lens package as claimed in Claim 5 or 6, in which the lens (9) can be held in position by means of a concave cover (6) which has means (7,8) to provide a snap fit onto the convex portion (11) after a lens has been positioned thereon.

8. A non-reusable sealed contact lens package containing a contact lens (9) and a sterile liquid, in which the contact lens (9) is held in position on a convex domed portion (11) which can only be removed from the container after breaking the seal.

9. A non-reusable package as claimed in Claim 8, in which the seal includes a cap (18), crimped onto the container (1) after the lens and fluid have been introduced.

10. A kit of parts for constructing a non-reusable contact lens package including a container (1), a non-reusable seal (5,16,18), and a lens holder (10).

11. A kit as claimed in Claim 10, in which the seal includes a cap (18) for crimping onto the container (1) and the lens holder (10) is joined onto the seal.

FIG 1

10

FIG 2